# EUROPEAN PATENT APPLICATION

(11) **EP 3 664 006 A1**
(43) Date of publication of application: **10.06.2020**
(21) Application number: 19213375.9
(22) Date of filing: 03.12.2019
(51) Int. Cl.: G06Q 20/40, G06Q 20/10, G06Q 20/38, G06Q 20/42, G07F 19/00

(54) **SYSTEMS AND METHODS FOR TRANSACTING AT A LOCAL FINANCIAL SERVICE PROVIDER DEVICE BY ONLINE CREDENTIALS**

(30) Priority: 04.12.2018 US 201816209530
(71) Applicant: Capital One Services, LLC, McLean, VA 22102 (US)
(72) Inventor: EDWARDS, Joshua, Philadelphia, PA, 19147 (US); NORMAN, Carrie, Frisco, Texas 75035 (US); NNAJI, Aka, Carrollton, Texas 75010 (US)
(74) Representative: Schulte, Drew Joseph

(57) **Abstract**

The disclosed embodiments provide systems and methods for transacting at a local financial service provider device. The system may include one or more memory devices storing instructions and one or more processors configured to execute the instructions to provide a prompt to a user to input data at the local financial service provider device. Additionally, the instructions may cause the processor to receive, via the prompt, authentication data associated with a customer. The authentication data may include a username and password. The one or more processors may further determine whether the received authentication data matches backend authentication data on record for the customer and in response to the determination whether the received authentication data matches backend authentication data on record for the customer, determine whether a customer profile associated with the backend authentication data includes one or more customer-defined transaction rules.

## Description

### TECHNICAL FIELD

The present disclosure provides systems and methods for transacting at a local financial service provider device using online credentials and without using a physical bank card and PIN. In particular, in some embodiments, an automated teller machine (ATM) may enable a transaction to take place in response to a user entering a username and password when a customer profile includes customer-defined transaction rules that enable the transaction to take place.

### BACKGROUND

Consumers often use local financial service provider devices when performing financial transactions. Typical local financial service provider devices, such as automated teller machines (ATMs), limit the type of credentials that may be used to enable a transaction. Traditional ATM technology as well as financial policies and procedures limit transactions to be authorized through use of a physical bank card, such as a debit or credit card, and PIN or by use of a mobile device. ATMs still require a physical component such as a bank card or mobile device to enable a transaction. Current mechanisms for transacting at an ATM require the customer to remember his or her PIN in addition to carrying the bank card or authenticate with an application running on a mobile device. Requiring that a physical bank card or mobile device be present when making a transaction at the ATM creates an inconvenience for the customer, who may prefer to initiate and authorize these transactions using online credentials and without having to carry a bank card or a mobile device.

Further, some typical ATM transaction systems are unappealing to customers who prefer not to carry valuables such as a mobile device or bank card or would like to provide another person with access to their account without providing their credit or debit card. For example, allowing a customer to initiate an ATM withdrawal using online credentials, rather than requiring him or her to insert a bank card at a public ATM, may allow the customer to feel more secure at certain locations, such as the beach. Further, allowing a customer to conduct a transaction without swiping a debit or credit card allows the customer to avoid the risk of exposing his or her financial information to ATM skimmers or other fraudulent devices. Moreover, allowing a customer to conduct a transaction using online credentials and without using a mobile application for authentication may be useful to a user whose phone battery has run out or who has lost his or her wallet. Furthermore, allowing a customer to conduct a transaction using online credentials may be beneficial for a user that wishes to give another person access to his or her financial account without providing a physical bank card or PIN.

In view of the shortcomings of current systems and methods for transacting at a local financial service provider device, an on-demand, quick, secure, and convenient mechanism for providing transactions at a local financial service provider device by online credentials to consumers is desired.

### SUMMARY

In the following description, certain aspects and embodiments of the present disclosure will become evident. It should be understood that the disclosure, in its broadest sense, could be practiced without having one or more features of these aspects and embodiments. It should also be understood that these aspects and embodiments are merely exemplary.

Disclosed embodiments provide systems for transacting at a local financial service provider device. For example, certain embodiments may include one or more memory devices storing instructions and one or more processors configured to execute the instructions to receive an input for defining one or more customer-defined transaction rules from an interactive display, wherein the interactive display provides controls for defining temporal, geographic, or multi-factor authentication constraints for the one or more customer-defined transaction rules, associate the one or more customer-defined transaction rules with a customer profile associated with backend authentication data on record for a customer, provide a prompt to a user to input data at the local financial service provider device, receive, via the prompt, authentication data associated with the customer, wherein the authentication data includes a username and password, determine whether the received authentication data matches the backend authentication data on record for the customer, in response to the determination whether the received authentication data matches the backend authentication data on record for the customer, determine whether the customer profile associated with the backend authentication data includes the one or more customer-defined transaction rules, in response to the determination whether the customer profile associated with the backend authentication data includes the one or more customer-defined transaction rules, determine whether the one or more customer-defined transaction rules enable a transaction to take place, in response to the determination whether the one or more customer-defined transaction rules enable the transaction to take place, authenticate the user, provide a second prompt to the user to select an interaction at the local financial service provider device, and provide an indication to the local financial service provider device to perform the transaction related to the selected interaction.

Disclosed embodiments provide computer-implemented methods for transacting at a local financial service provider device. For example, certain embodiments may include receiving an input for defining one or more customer-defined transaction rules from an interactive display, wherein the interactive display provides controls for defining temporal, geographic, or multi-factor authentication constraints for the one or more customer-defined transaction rules, associating the one or more customer-defined transaction rules with a customer profile associated with backend authentication data on record for a customer, providing, by one or more processors, a prompt to a user to input data at the local financial service provider device, receiving via the prompt, by the one or more processors, authentication data associated with the customer, wherein the authentication data includes a username and password, determining, by the one or more processors, whether the received authentication data matches the backend authentication data on record for the customer, in response to the determination whether the received authentication data matches the backend authentication data on record for the customer, determining, by the one or more processors, whether the customer profile associated with the backend authentication data includes the one more customer-defined transaction rules, in response to the determination whether the customer profile associated with the backend authentication data includes the customer-defined transaction rules, determining, by the one or more processors, whether the one or more customer-defined transaction rules enable a transaction to take place, in response to the determination whether the one or more customer-defined transaction rules enable the transaction to take place, authenticating the user, by the one or more processors, providing, by the one or more processors, a second prompt to the user to select an interaction at the local financial service provider device, and providing, by the one or more processors, an indication to the local financial service provider device to perform the transaction related to the selected interaction.

Disclosed embodiments provide systems for transacting at a local financial service provider device. For example, certain embodiments may include one or more memory devices storing instructions and one or more processors configured to provide a prompt to a user to input data at the local financial service provider device, receive, via the prompt, first authentication data associated with a customer, wherein the first authentication data includes a username and password, determine whether the received first authentication data matches backend authentication data on record for the customer, in response to the determination whether the received first authentication data matches the backend authentication data on record for the customer, provide a prompt via a second device separate from the local financial service provider device, receive second authentication data associated with the backend authentication data on record for the customer, determine whether the received second authentication data matches backend authentication data on record for the customer, in response to the determination whether the received second authentication data matches backend authentication data on record for the customer, authenticate the user, provide a second prompt to the user to select an interaction at the local financial service provider device; and, provide an indication to the local financial service provider device to perform a transaction related to the selected interaction.

Disclosed embodiments provide systems for transacting at a local financial service provider device. For example, certain embodiments may include one or more memory devices storing instructions and one or more processors configured to execute the instructions to receive an input for defining one or more customer-defined transaction rules and providing biometric data from an interactive display, wherein the interactive display provides controls for defining temporal, geographic, or multi-factor authentication constraints for the one or more customer-defined transaction rules, associate the one or more customer-defined transaction rules and the biometric data with a customer profile associated with backend authentication data on record for a customer, provide a prompt to a user to input data at the local financial service provider device, receive, via the prompt, authentication data associated with the customer, wherein the authentication data includes a username and password, determine whether the received authentication data matches the backend authentication data on record for the customer, in response to the determination whether the received authentication data matches the backend authentication data on record for the customer, determine whether the customer profile associated with the backend authentication data includes the one or more customer-defined transaction rules, in response to the determination whether the customer profile associated with the backend authentication data includes the one or more customer-defined transaction rules, determine whether the one or more customer-defined transaction rules enable a transaction to take place, provide a biometric check at the local financial service device, receive biometric data of the user, determine whether the received biometric data matches the backend authentication data on record for the customer, in response to the determination whether the one or more customer-defined transaction rules enable the transaction to take place and the determination whether the received biometric data matches the backend authentication data on record for the customer, authenticate the user, provide a second prompt to the user to select an interaction at the local financial service provider device, and provide an indication to the local financial service provider device to perform the transaction related to the selected interaction.

Disclosed embodiments provide computer-implemented methods for transacting at a local financial service provider device. For example, certain embodiments may include receiving an input for defining one or more customer-defined transaction rules and providing biometric data from an interactive display, wherein the interactive display provides controls for defining temporal, geographic, or multi-factor authentication constraints for the one or more customer-defined transaction rules, associating the one or more customer-defined transaction rules and the biometric data with a customer profile associated with backend authentication data on record for a customer, providing, by one or more processors, a prompt to a user to input data at the local financial service provider device, receiving via the prompt, by the one or more processors, authentication data associated with the customer, wherein the authentication data includes a username and password, determining, by the one or more processors, whether the received authentication data matches the backend authentication data on record for the customer, in response to the determination whether the received authentication data matches the backend authentication data on record for the customer, determining, by the one or more processors, whether the customer profile associated with the backend authentication data includes the one or more customer-defined transaction rules, in response to the determination whether the customer profile associated with the backend authentication data includes the one or more customer-defined transaction rules, determining, by the one or more processors, whether the one or more customer-defined transaction rules enable a transaction to take place, providing a biometric check at the local financial service device, receiving biometric data of the user, determining whether the received biometric data matches the backend authentication data on record for the customer, in response to the determination whether the one or more customer-defined transaction rules enable the transaction to take place and the determination whether the received biometric data matches the backend authentication data on record for the customer, authenticating the user, by the one or more processors, providing, by the one or more processors, a second prompt to the user to select an interaction at the local financial service provider device, and providing, by the one or more processors, an indication to the local financial service provider device to perform the transaction related to the selected interaction.

Disclosed embodiments provide systems for transacting at a local financial service provider device. For example, certain embodiments may include one or more memory devices storing instructions and one or more processors configured to provide a prompt to a user to input data at the local financial service provider device, receive, via the prompt, first authentication data associated with a customer, wherein the first authentication data includes a username and password, determine whether the received first authentication data matches backend authentication data on record for the customer, in response to the determination whether the received first authentication data matches backend authentication data on record for the customer, provide a prompt via a second device separate from the local financial service provider device, receive second authentication data associated with the backend authentication data on record for the customer, determine whether the received second authentication data matches backend authentication data on record for the customer, provide a biometric check at the local financial service device, receive biometric data of the user, determine whether the received biometric data matches backend authentication data on record for the customer, in response to the determination whether the received second authentication data matches backend authentication data on record for the customer and the determination whether the received biometric data matches backend authentication data on record for the customer, authenticate the user, provide a second prompt to the user to select an interaction at the local financial service provider device, and provide an indication to the local financial service provider device to perform a transaction related to the selected interaction.

In accordance with additional embodiments of the present disclosure, a computer-readable medium is disclosed that stores instructions that, when executed by a processor(s), causes the processor(s) to perform operations consistent with one or more disclosed methods.

The foregoing general description and the following detailed description are exemplary and explanatory only and are not restrictive of the claims.

It is to be understood that both the foregoing general description and the following detailed description are exemplary and explanatory only, and are not restrictive of the disclosed embodiments, as claimed.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:
FIG. 1 is a block diagram of an exemplary system, consistent with disclosed embodiments.
FIG. 2 is a block diagram of an exemplary computer system, consistent with disclosed embodiments.
FIG. 3 is a flowchart of an exemplary process for transacting at a local financial service provider device by online credentials and customer-defined transaction rules, consistent with disclosed embodiments.
FIG. 4 is a flowchart of an exemplary process for transacting at a local financial service provider device by online credentials and a second form of authentication data, consistent with disclosed embodiments.
FIG. 5 is a block diagram of an exemplary process for transacting at a local financial service provider device by online credentials and either customer-defined transaction rules or a second form of authentication data, consistent with disclosed embodiments.

### DESCRIPTION OF THE EMBODIMENTS

Reference will now be made in detail to exemplary embodiments, examples of which are illustrated in the accompanying drawings and disclosed herein. Wherever convenient, the same reference numbers will be used throughout the drawings to refer to the same or like parts.

As described in further detail herein, the disclosed embodiments are directed to systems and methods for transacting at a local financial service provider device by online credentials.

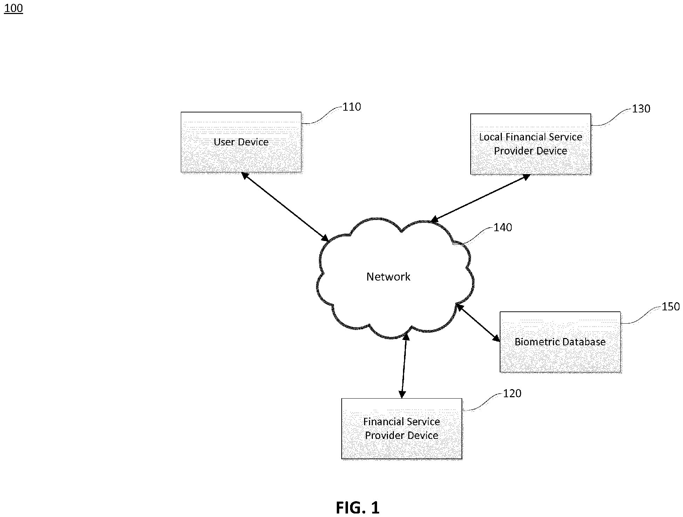

Figure 1 shows a diagram of an exemplary system 100, consistent with disclosed embodiments. As shown in Figure 1, system 100 may include a user device 110, a financial service provider device 120, a local financial service provider device 130, and a network 140 to facilitate communication among the components of system 100. The components and arrangement of the components included in system 100 may vary. Thus, system 100 may further include other components that perform or assist in the performance of one or more processes consistent with the disclosed embodiments. The components and arrangements shown in Figure 1 are not intended to limit the disclosed embodiments, as the components used to implement the disclosed processes and features may vary.

In accordance with disclosed embodiments, a detection and identification system 100 may include a financial service provider (FSP) device 120. FSP device 120 may be a system associated with a financial service provider (not shown), such as a bank, a credit card company, a lender, brokerage firm, or any other type of financial service entity that generates, provides, manages, and maintains financial service accounts, etc. for one or more users. FSP device 120 may be one or more computing systems that are configured to execute software instructions stored on one or more memory devices to perform one or more operations consistent with the disclosed embodiments. For example, FSP device 120 may include one or more memory device(s) storing data and software instructions, and one or more processor(s) configured to use the data and execute the software instructions to perform server-based functions and operations known to those skilled in the art. FSP device 120 may include one or more general purpose computers, mainframe computers, or any combination of these types of components.

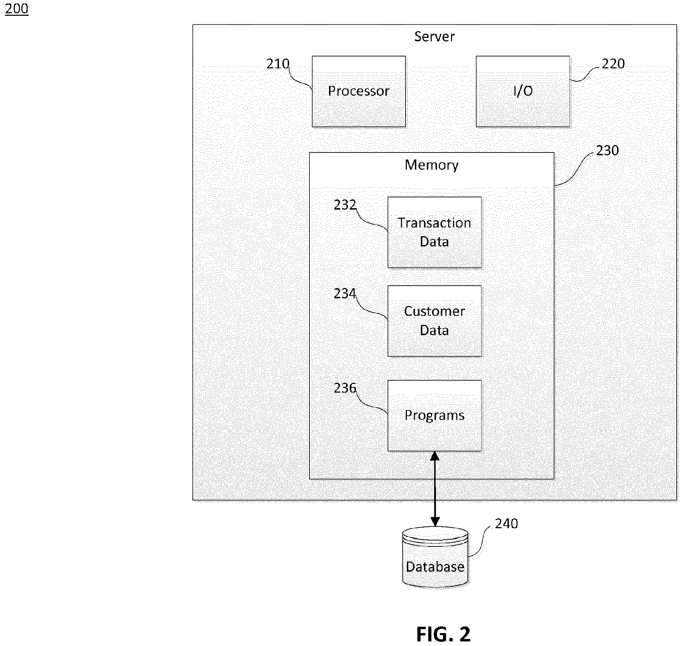

In certain embodiments, FSP device 120 may be configured as a particular apparatus, system, and the like based on the storage, execution, and/or implementation of the software instructions that cause a processor to perform one or more operations consistent with the disclosed embodiments. FSP device 120 may be standalone, or it may be part of a subsystem, which may be part of a larger system. For example, FSP device 120 may represent distributed servers that are remotely located and communicate over a public network (e.g., network 140) or a dedicated network, such as a LAN, for a financial service provider. An exemplary computing system consistent with FSP device 120 is discussed in additional detail with respect to Figure 2, below.

FSP device 120 may include or may access one or more storage devices configured to store data and/or software instructions used by one or more processors of FSP device 120 to perform operations consistent with disclosed embodiments. For example, FSP device 120 may include memory (e.g. memory 230 in Fig. 2) configured to store one or more software programs that performs several functions when executed by a processor. The disclosed embodiments are not limited to separate programs or computers configured to perform dedicated tasks. For example, FSP device 120 may include memory that stores a single program or multiple programs. Additionally, FSP device 120 may execute one or more programs located remotely from FSP device 120. For example, FSP device 120 may access one or more remote programs stored in memory included with a remote component that, when executed, perform operations consistent with the disclosed embodiments. In certain aspects, FSP device 120 may include server software that generates, maintains, and provides services associated with financial account management. In other aspects, FSP device 120 may connect separate server(s) or similar computing devices that generate, maintain, and provide services associated with financial data for a financial service provider associated with FSP device 120.

System 100 may also include one or more local FSP devices 130. Local FSP devices may include, for example, automated teller machines (ATMs) or detection devices (e.g. a card reader) in local FSP branches. Local FSP device 130 may include one or more memory device(s) that store data that may be used for performing one or more processes consistent with the disclosed embodiments. For example, local FSP device 130 may include one or more memory device(s) storing data and software instructions, and one or more processor(s) configured to use the data and execute the software instructions to perform computing functions and operations known to those skilled in the art. In certain aspects, local FSP device 130 may additionally, or alternatively, include one or more servers or other types of computer devices, which may be configured to execute software instructions stored in memory to perform one or more processes consistent with the disclosed embodiments.

Local FSP device 130 may include, for example, a card slot, a screen, a keyboard or on-screen touchpad, a cash dispenser, a speaker, a camera, a scanning device, or a receipt printer.

Local FSP device 130 may further include server(s) that are configured to execute stored software instructions to perform operations associated with collecting, storing, and accessing biometric data, including one or more processes associated with gathering biometric data from a variety of sources, compiling the data, and organizing the data into easily accessible profiles. Local FSP device 130 may include one or more servers that may be a general purpose computer, a mainframe computer, or any combination of these components. In certain embodiments, local FSP device 130 (or a system including local FSP device 130) may be configured as a particular apparatus, system, and the like based on the storage, execution, and/or implementation of the software instructions that cause a processor to perform one or more operations consistent with the disclosed embodiments. A local FSP device 130 may be standalone, or it may be part of a subsystem, which may be part of a larger system. For example, local FSP device 130 may represent distributed servers that are remotely located and communicate over a public network (e.g., network 140) or a dedicated network, such as a LAN. An exemplary computer system consistent with local FSP device 130 is discussed in additional detail with respect to Figure 2. In certain embodiments, a third party may operate the components associated with local FSP device 130. Additionally or alternatively, local FSP device 130 may be a part or subpart of FSP device 120.

System 100 may further include one or more user devices 110. A user may operate a user device 110, which may be a desktop computer, laptop, tablet, smartphone, multifunctional watch, pair of multifunctional glasses, tracking device, or any suitable device with computing capability. User device 110 may include one or more processor(s) and memory device(s) known to those skilled in the art. For example, user device 110 may include memory device(s) that store data and software instructions that, when executed by one or more processor(s), perform operations consistent with the disclosed embodiments. In one aspect, user device 110 may have an interactive display providing controls for defining temporal, geographic, or multi-factor authentication constraints for one or more customer-defined transaction rules. In another aspect, user device 110 may have a financial application installed thereon, which may enable user device 110 to communicate with FSP device 120 via network 140. For instance, user device 110 may be a smartphone or tablet or the like that executes a stored mobile application that performs online banking operations. In other embodiments, user device 110 may connect to FSP device 120 through use of browser software stored and executed by user device 110. User device 110 may be configured to execute software instructions to allow a user to access information stored in FSP 120, such as, for example, financial information related to recent purchase transactions, financial discounts, financial statements, account information, rewards program information and the like. Additionally, user device 110 may be configured to execute software instructions that initiate and conduct transactions with FSP device 120, such as, for example, ATM withdrawals, wire transfers, debit card PIN resets, and call center transactions. An exemplary computer system consistent with user device 110 is discussed in additional detail with respect to Figure 2.

A user may operate local FSP device 130 and/or user device 110 to perform one or more operations consistent with the disclosed embodiments. In one aspect, a user may be a customer of a financial service provider. For instance, a financial service provider may maintain a financial service account (e.g., checking account, savings account, debit card account, or credit card account) for the user that the user may use to purchase goods and/or services. Additionally or alternatively, the user may use local FSP device 130 and/or user device 110 and the financial service account (for example, through a mobile application installed on user device 110) to withdraw cash from an ATM, contact a customer call center, transfer or wire money, or reset his or her debit account PIN.

A user may further operate local FSP device 130 and/or user device 110 in order to be detected and recognized by local FSP device 130. For example, local FSP device 130 may detect the user and authorize a transaction through receipt of authentication data (for example online credentials such as username and password), determination of whether received authentication data matches backend authentication data on record for a customer, determination of whether a customer profile associated with the backend authentication data includes customer-defined transaction rules, and whether the customer-defined transaction rules enable a transaction to take place. The user may then use local FSP device 130 to initiate, conduct, or complete a financial transaction without the need for the user to provide a physical bank card or PIN to the FSP device 130.

System 100 may also include one or more biometric databases 150. Biometric database 150 may include one or more memory device(s) that store data that may be used for performing one or more processes consistent with the disclosed embodiment. In certain aspects, biometric database 150 may additionally, or alternatively, include one or more servers or other types of computer devices. The biometric database 150 may include one or more server(s), which may be one or more computing devices configured to execute software instructions stored in memory to perform one or more processes consistent with the disclosed embodiments. For example, biometric database 150 may include one or more memory device(s) storing data and software instructions, and one or more processor(s) configured to use the data and execute the software instructions to perform server-based functions and operations known to those skilled in the art.

Biometric database 150 may further include server(s) that are configured to execute stored software instructions to perform operations associated with collecting, storing, and accessing biometric data, including one or more processes associated with gathering biometric data from a variety of sources, compiling the data, and organizing the data into easily accessible profiles. Biometric database 150 may include one or more servers that may be a general purpose computer, a mainframe computer, or any combination of these components. In certain embodiments, biometric database 150 (or a system including biometric database 150) may be configured as a particular apparatus, system, and the like based on the storage, execution, and/or implementation of the software instructions that perform one or more operations consistent with the disclosed embodiments. A biometric database 150 may be standalone, or it may be part of a subsystem, which may be part of a larger system. For example, biometric database 150 may represent distributed servers that are remotely located and communicate over a public network (e.g., network 140) or a dedicated network, such as a LAN. An exemplary computer system consistent with biometric database 150 is discussed in additional detail with respect to Figure 2.

In certain embodiments, biometric database 150 may be associated with an entity, such as a company, organization, agency, etc. In some embodiments, the biometric database entity may be a different entity than a financial service provider associated with FSP device 120. In certain aspects, a user or users affiliated with a biometric database entity may operate one or more components associated with biometric database 150 to collect and maintain biometric data. In other embodiments, biometric database 150 may be associated with a financial service provider or other entity associated with FSP device 120. For example, biometric database 150 may be a part or subpart of FSP device 120.

Network 140 may comprise any type of computer networking arrangement used to exchange data. For example, network 140 may be the Internet, a private data network, a virtual private network using a public network, a Wi-Fi network, a LAN or WAN network, and/or other suitable connections that may enable information exchange among various components of the system 100. Network 140 may also include a public switched telephone network ("PSTN") and/or a wireless cellular network. Network 140 may be a secured network or unsecured network. In other embodiments, one or more components of system 100 may communicate directly through a dedicated communication link(s), such as links between user device 110, financial service provider device 120, and local FSP device 130.

Additionally or alternatively, network 140 may include a direct communication network. Direct communications may use any suitable technologies, including, for example, BLUETOOTH™, BLUETOOTH LE™ (BLE), Wi-Fi, near field communications (NFC), or other suitable communication methods that provide a medium for transmitting data between separate devices. In certain embodiments, user device 110 and local FSP device 130 may connect and communicate through a direct communications network.

Other components known to one of ordinary skill in the art may be included in system 100 to process, transmit, provide, and receive information consistent with the disclosed embodiments.

Figure 2 shows a diagram of an exemplary computing system 200 illustrating a computing system configuration that may be associated with financial service provider device 120, local FSP device 130, biometric database 150, and/or user device 110, consistent with disclosed embodiments. In some embodiments, computing system 200 may include one or more processors 210, one or more memories 230, and one or more input/output (I/O) devices 220. In some embodiments, computing system 200 may take the form of a server, general purpose computer, a mainframe computer, laptop, smartphone, mobile device, or any combination of these components. In certain embodiments, computing system 200 (or a system including computing system 200) may be configured as a particular apparatus, system, and the like based on the storage, execution, and/or implementation of the software instructions that cause a processor to perform one or more operations consistent with the disclosed embodiments. Computing system 200 may be standalone, or it may be part of a subsystem, which may be part of a larger system.

Processor 210 may include one or more known processing devices, such as a microprocessor from the Pentium™ or Xeon™ family manufactured by Intel™, the Turion™ family manufactured by AMD™, or any of various processors manufactured by Sun Microsystems. Processor 210 may constitute a single core or multiple core processor that executes parallel processes simultaneously. For example, processor 210 may be a single core processor configured with virtual processing technologies. In certain embodiments, processor 210 may use logical processors to simultaneously execute and control multiple processes. Processor 210 may implement virtual machine technologies, or other known technologies to provide the ability to execute, control, run, manipulate, store, etc. multiple software processes, applications, programs, etc. In another embodiment, processor 210 may include a multiple-core processor arrangement (e.g., dual, quad core, etc.) configured to provide parallel processing functionalities to allow computing system 200 to execute multiple processes simultaneously. One of ordinary skill in the art would understand that other types of processor arrangements could be implemented that provide for the capabilities disclosed herein. The disclosed embodiments are not limited to any type of processor(s) configured in computing system 200.

Memory 230 may include one or more storage devices configured to store instructions used by processor 210 to perform functions related to the disclosed embodiments. For example, memory 230 may be configured with one or more software instructions, such as program(s) 236 that may perform one or more operations when executed by processor 210. The disclosed embodiments are not limited to separate programs or computers configured to perform dedicated tasks. For example, memory 230 may include a program 236 that performs the functions of computing system 200, or program 236 could comprise multiple programs. Additionally, processor 210 may execute one or more programs located remotely from computing system 200. For example, financial service provider device 120, biometric database 150, or user device 110, may, via computing system 200 (or variants thereof), access one or more remote programs that, when executed, perform functions related to certain disclosed embodiments. Processor 210 may further execute one or more programs located in database 240. In some embodiments, programs 236 may be stored in an external storage device, such as a cloud server located outside of computing system 200, and processor 210 may execute programs 236 remotely.

Programs executed by processor 210 may cause processor 210 to execute one or more processes related to financial services provided to users including, but not limited to, processing credit and debit card transactions, checking transactions, fund deposits and withdrawals, transferring money between financial accounts, lending loans, processing payments for credit card and loan accounts, and processing ATM cash withdrawals.

Memory 230 may also store data that may reflect any type of information in any format that the system may use to perform operations consistent with the disclosed embodiments. Memory 230 may store instructions to enable processor 210 to execute one or more applications, such as server applications, an authentication application, network communication processes, and any other type of application or software. Alternatively, the instructions, application programs, etc., may be stored in an external storage (not shown) in communication with computing system 200 via network 140 or any other suitable network. Memory 230 may be a volatile or non-volatile, magnetic, semiconductor, tape, optical, removable, non-removable, or other type of storage device or tangible (i.e., non-transitory) computer-readable medium.

Memory 230 may include transaction data 232. Transaction data 232 may include information related to financial transactions initiated by a user. For example, transaction data may include online credentials such as a username and password. In further examples, transaction data may include a user identifier and a transaction type. The user identifier may be a credit or debit card number, an account number, or another means for identifying the user initiating the financial transaction. The transaction type may include an indicator of the type of transaction the user is initiating, such as, ATM cash withdrawal, deposit transaction, cash a check transaction, make change transaction, check balance transaction, currency exchange transaction, debit PIN reset, money wire or transfer, call to the customer service center, or other transactions requiring user authentication. Transaction data 232 may also include authentication data obtained from the user for the purposes of authorizing the transaction, for example, by verifying the online credentials compared to backend online credentials on record for the customer or authenticity of provided biometric data as compared to stored biometric data. Additionally or alternatively, transaction data 232 may be stored in database 240 or in an external storage (not shown) in communication with computing system 200 via network 140 or any other suitable network. In some embodiments, transaction data 232 may include biometric data received from the user.

Memory 230 may further include customer data 234. Customer data 234 may include information about particular customers of the financial service provider. For example, client data 234 may include clients' online credentials, account information, debit or credit card information, history of purchase transactions, financial statements, credit score, risk profile, username and password, debit card PIN, home and work locations, and/or biometric information. Additionally, customer data 234 may include user device identification information, such as, for example, a phone number, email address, IP address, BLUETOOTH™ signature, or other device identifier. Alternatively customer data 234 may be stored in database 240 or in an external storage (not shown) in communication with computing system 200 via network 140 or any other suitable network.

Processor 210 may analyze transaction data 232 in reference to customer data 234. For example, processor 210 may analyze transaction data to determine which client with information stored in client information 234 is initiating the financial transaction. In some embodiments, in determining which client with information stored in client information 234 is initiating the financial transaction, the transaction data is a hashed version of the transaction data. Processor 210 may access the particular user's customer information to determine the user's account information, debit or credit card information, history of purchase transactions, financial statements, credit score, risk profile, username and password, debit card PIN, home and work locations, and/or authentication data.

I/O devices 220 may be one or more device that is configured to allow data to be received and/or transmitted by computing system 200. I/O devices 220 may include one or more digital and/or analog communication devices that allow computing system 200 to communicate with other machines and devices, such as other components of system 100 shown in Figure 1. For example, computing system 200 may include interface components, which may provide interfaces to one or more input devices, such as one or more keyboards, mouse devices, and the like, which may enable computing system 200 to receive input from an operator of FSP device 120 (not shown).

Computing system 200 may also contain one or more database(s) 240. Alternatively, computing system 200 may be communicatively connected to one or more database(s) 240. Computing system 200 may be communicatively connected to database(s) 240 through network 140. Database 240 may include one or more memory devices that store information and are accessed and/or managed through computing system 200. By way of example, database(s) 240 may include Oracle™ databases, Sybase™ databases, or other relational databases or non-relational databases, such as Hadoop sequence files, HBase, or Cassandra. The databases or other files may include, for example, data and information related to the source and destination of a network request and the data contained in the request, etc. Systems and methods of disclosed embodiments, however, are not limited to separate databases. Database 240 may include computing components (e.g., database management system, database server, etc.) configured to receive and process requests for data stored in memory devices of database(s) 240 and to provide data from database 240.

As discussed above, FSP device 120 may include at least one computing system 200. Further, although sometimes discussed here in relation to FSP device 120, it should be understood that variations of computing system 200 may be used by other components of system 100, including local FSP device 130 and user device 110. Computing system 200 may be a single server or may be configured as a distributed computer system including multiple servers or computers that interoperate to perform one or more of the processes and functionalities associated with the disclosed embodiments.

In some aspects, local FSP device 130 and/or user device 110 may include the same or similar configuration and/or components of computing system 200. For example, computing system 200, when implemented in local FSP device 130, may include hardware and/or software installed therein for performing one or more processes disclosed herein.

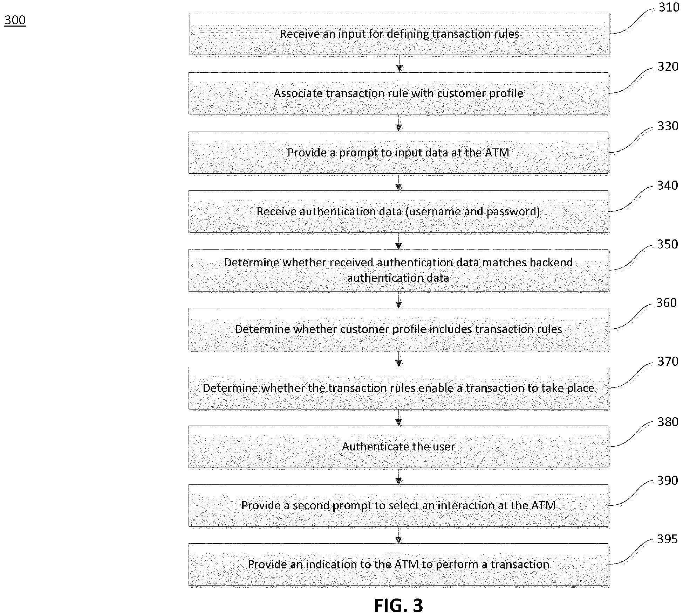

Figure 3 shows an exemplary transaction process by using online credentials and customer-defined transaction rules at a local financial service provider device, consistent with disclosed embodiments. Process 300 may be performed by processor 210 of, for example, FSP device 120 and/or local FSP device 130 executing instructions encoded on a computer-readable medium storage device. It is to be understood, however, that one or more steps of process 300 may be implemented by other components of system 100 (shown or not shown), including user device 110. In some embodiments, a user may make a transaction at an ATM without hassle of carrying credit card, wallet, or even a cell phone. In such embodiments, the user may make a transaction at the ATM by using authentication data such as online credentials (e.g. username and password configured for use for an online bank account). In some embodiments, a user can give access to a child or other authorized party by providing the online credentials. In other embodiments, the user may create multiple sets of online credentials for the same account with different administrative controls. With a first set of online credentials, for example, a user may withdraw up to $50 at an ATM per week, however, with the second set of online credentials, the user may have additional capability, including the ability to change a PIN and withdraw an unlimited amount of money.

At step 310, FSP device 120 may receive an input for defining one or more customer-defined transaction rules from an interactive display. The interactive display may provide controls for defining temporal, geographic, or multi-factor authentication constraints for one or more customer-defined transaction rules. In some embodiments, a user may select temporal, geographic, or multi-factor authentication constraints via interactive display of user device 110.

At step 320, FSP device 120 may associate one or more customer-defined transaction rules received in step 310 with a customer profile associated with backend authentication data on record for a customer.

At step 330, local FSP device 130, an ATM for example, may provide a prompt to a user to input data at the local financial service provider device. The prompt may be provided on a display of local FSP device 130 in response to the user indicating to transact by use of online credentials.

At step 340, local FSP device 130 may receive, via the prompt, authentication data or online credentials (e.g. a username and password) associated with a customer. In one aspect, local FSP device 130 may receive authentication data from the prompt. Authentication data may be entered manually into local FSP device 130 by the user, for example by typing it on a keyboard, using an on-screen touchpad, typing on another input device (not shown), using voice recognition software, or any mechanism for entering a username and password.

Authentication data may include a username and password, a type of transaction and a customer identifier, or any mechanism for signing into an online account. A type of transaction may include, for example, an ATM withdrawal, a money transfer or wire transaction, a PIN reset, a deposit, a request to cash a check, a request to make change, a request for balance, a currency exchange, a call to a customer service center or the like. In certain embodiments, transaction data may include other data relating to transactions that is known to those skilled in the art, such as transaction amount, timestamp information, entity identifier, account identifier(s), etc. In some embodiments, local FSP device 130 may further provide a prompt to the user to input additional transaction data (e.g. transaction type and transaction amount) at the local financial service provider device as a check.

At step 350, local FSP device 130 may determine whether the received authentication data matches backend authentication data on record for the customer. In some embodiments, the determination of whether the received authentication data matches backed authentication data on record for the customer may be a "yes" or "no" indication.

In some embodiments, the received authentication data for the determination whether the received authentication data matches the backend authentication data on record for the customer is a hashed, salted, or salted and hashed version of the received authentication data. In other embodiments, the received authentication data for the determination whether the received authentication data matches the backend authentication data on record for the customer is an encrypted or other version of the received authentication data. If the received authentication data matches the backend authentication data on record for the customer, then the process continues to step 360. Otherwise, the user may not be able to make a transaction by using online credentials for authentication.

At step 360, local FSP device 130 may in response to the determination whether the received authentication data matches backend authentication data on record for the customer, determine whether a customer profile associated with the backend authentication data includes customer-defined transaction rules.

In some embodiments, a customer profile and transaction rule may be automatically created when a user creates an account (i.e. when an account is opened). Certain transaction rules may be automatically loaded, including, for example, allowing for transactions using online credentials at ATMs within a one-mile radius of their home zipcode. In other embodiments, the customer profile and transaction rules may be added and defined by the customer when the customer enrolls in online servicing of an account. For example, a user may log in to a web portal, within a web or mobile based application, or any other system provided to service an account and have an option to set up transaction rules.

In some embodiments, the transaction rules include rules set up by the customer for transacting with the local financial service provider device by username and password. For example, a user may log into an online banking site and set rules to enable ATM transactions by use of online credentials. In some embodiments, a user may configure or pre-set which ATMs to allow transactions by online credentials by date, time, location, etc. In other embodiments, the user may preset multi-factor authentication for making transactions by online credentials (e.g. confirm by phone). In such an embodiment, the user may receive a text after configuring the transaction rule stating "Please confirm that online credentials will be valid at ATM on 1^{st} and H street Northwest Washington, D.C., tomorrow, January 1, 2018. REPLY YES or NO." In some embodiments, the user may set up a transaction rule to allow transactions by online credentials at ATMs that the user has previously used (based on either pre-configuration or transaction history). In yet another embodiment, the user may set up a transaction rule to block transactions by online credentials or any transaction at certain ATMs based on date, time or location. For example, a user may block transaction at a certain ATM or after 2AM based on history of theft.

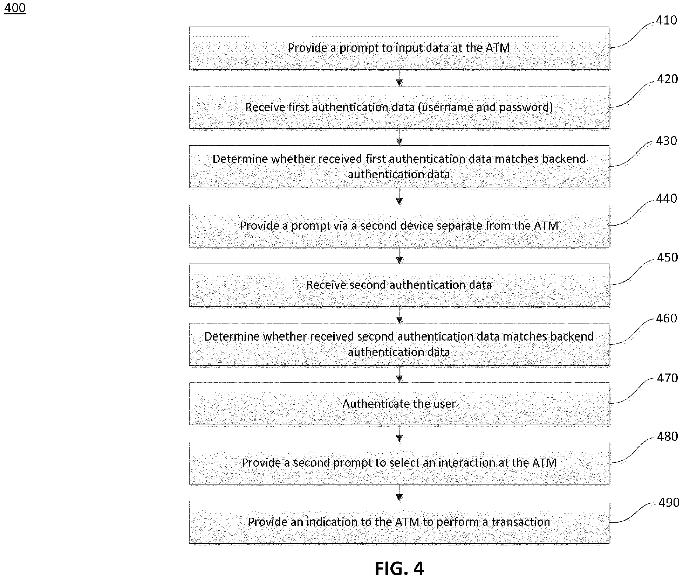

If the customer profile associated with the backend authentication data includes transaction rules, then the process continues to step 370. Otherwise, the user may have to provide a second form of authentication data in order to make a transaction by online credentials as described in Figure 4.

At step 370, in response to the determination whether the customer profile associated with the backend authentication data includes transaction rules, local FSP device 130 may determine whether the transaction rules enable a transaction to take place.

In some embodiments, determining whether the transaction rules enable the transaction to take place may include determining, by checking the customer profile, if the user is allowed to authenticate against local FSP device 130 using only the username and password. In another embodiment, determining whether the transaction rules enable the transaction to take place may include determining, by checking the customer profile, if the user is allowed to authenticate against local FSP device 130 at a certain location. For example, a user may set up transaction rules to enable the use of online credentials to authenticate against local FSP device 130 and perform a transaction in predetermined zip codes, areas near the user's work or home, areas the user spends 10+ hours a week, for example, areas close to GPS coordinate of the user's phone (e.g. user device 110) or family members' phones, last known location, expected location determined by credit card purchase history or the like. In another embodiment, determining whether the transaction rules enable the transaction to take place may include determining, by checking the customer profile, if the user is allowed to authenticate against local FSP device 130 at a certain time or on a reoccurring time of day, etc. For example, a user may set up transaction rules to use online credentials to perform transactions on Wednesday's because the user bikes to work, during lunch hours on work days, or for two weeks during vacation. In such an embodiment, the user is allowed to authenticate against local FSP device 130 if it is a Wednesday, a lunch hour on a work day, or the two-week span of the user's vacation. In another embodiment, determining whether the transaction rules enable the transaction to take place may include determining, by checking the customer profile, if the user is allowed to authenticate against local FSP device 130 on a certain date or reoccurring day of the week. For example, a user may set up transaction rules to use online credentials to perform transactions every Friday and weekend. In yet another embodiment, determining whether the transaction rules enable the transaction to take place may include determining, by checking the customer profile, if the user is allowed to authenticate against local FSP device 130 without multi-factor authentication. For example, a user may set up transaction rules to use online credentials to perform transactions using only online credentials.

If the transaction rules enable a transaction to take place, then the process continues to step 380. Otherwise, the user may have to provide a second form of authentication data in order to make a transaction by online credentials as described in Figure 4.

At step 380, local FSP device 130 may in response to the determination whether the transaction rules enable the transaction to take place, authenticate the user. In some embodiments, the user may be authenticated by online credentials for making limited transactions at the ATM. For example, a user may make up to a $50 withdrawal using online credentials. In order to make transactions higher than that limit, the user must provide a second form of authentication data, other than online credentials such as biometric data, answer a question, email or text confirmation.

If the user is authenticated, then the process continues to step 390. Otherwise, the user may have to provide a second form of authentication data in order to make a transaction by online credentials as described in Figure 4.

At step 390, local FSP device 130 may provide a second prompt to the user to select an interaction at the local financial service provider device.

In some embodiments, the interaction may include a withdrawal transaction, a deposit transaction, cash a check transaction, make change transaction, check balance transaction, or currency exchange transaction, etc.

At step 395, local FSP device 130 may provide an indication to the local financial service provider device to perform the transaction related to the selected interaction.

In some embodiments, local FSP device 130 may print a receipt listing the performed transaction. In other embodiments, local FSP device 130 may send an electronic receipt to user device 110.

Figure 4 shows an exemplary transaction process by online credentials and a second form of authentication data at a local financial service provider device, consistent with disclosed embodiments. Process 400 may be performed by processor 210 of, for example, FSP device 120 and/or local FSP device 130 executing instructions encoded on a computer-readable medium storage device. It is to be understood, however, that one or more steps of process 400 may be implemented by other components of system 100 (shown or not shown), including user device 110. In some embodiments, a user may not have transaction rules set up but may make a transaction at an ATM without hassle of carrying credit card or wallet. In such embodiments, the user may make a transaction at the ATM by using authentication data such as online credentials (e.g. username and password configured for use for an online bank account) and a second device such as a cell phone to provide a second form of authentication. In some embodiments, a user may make a transaction using the ATM by entering online credentials and a second form of authentication data, such as biometric data, text or call from a verified phone number, a PIN that was sent to a verified phone number, etc.

At step 410, local FSP device 130 may provide a prompt to a user to input data at the local financial service provider device. The prompt may be provided on a display of local FSP device 130 in response to the user indicating to transact by use of online credentials.

At step 420, local FSP device 130 may receive, via the prompt, first authentication data or online credentials (e.g. a username and password) associated with a customer. In one aspect, local FSP device 130 may receive authentication data from the prompt. Authentication data may be entered manually into local FSP device 130 by the user, for example by typing it on a keyboard, using an on-screen touchpad, typing on another input device (not shown), using voice recognition software, or any mechanism for entering a username and password.

At step 430, local FSP device 130 may determine whether the received first authentication data matches backend authentication data on record for the customer. In some embodiments, the determination of whether the received first authentication data matches backed authentication data on record for the customer may be a "yes" or "no" indication.

In some embodiments, the received first authentication data for the determination whether the received authentication data matches the backend authentication data on record for the customer is a hashed, salted, or salted and hashed version of the received first authentication data. In other embodiments, the received first authentication data for the determination whether the received authentication data matches the backend authentication data on record for the customer is an encrypted or other version of the received first authentication data. If the received first authentication data matches the backed authentication data on record for the customer, then the process continues to step 360. Otherwise, the user may not be able to make a transaction by using online credentials for authentication.

At step 440, local FSP device 130 may in response to the determination whether the received first authentication data matches backend authentication data on record for the customer, provide a prompt via a second device separate from the local financial service provider device. In some embodiments, the second device may be a mobile device used to authenticate the user when no transaction rule is set up or when a transaction rule is configured to allow authentication via online credentials with added validation.

At step 450, FSP device 120 may receive second authentication data associated with the backend authentication data on record for the customer.

In one aspect, local FSP device 130 may receive second authentication data from user device 110. As an example, user device 110 may execute a mobile application associated with the financial service provider associated with FSP device 120. The user device 110 may transmit second authentication data via network 140 to FSP device 120. Second authentication data may be entered manually into user device 110 by a user, for example by typing it on a keyboard or other input device (not shown), using voice recognition software, etc. Second authentication data may also be entered and transmitted automatically, for example, by a mobile application on user device 110. For example, a user operating user device 110 may enter information requesting a monetary withdrawal of funds from a financial service account provided by a financial service provider (e.g., an entity associated with FSP device 120). User device 110 may be configured to generate an interface to request second authentication data from the user regarding the withdrawal. User device 110 may receive the user input of second authentication data and store the received second authentication data for processing in accordance with one or more operations consistent with the disclosed embodiments. Alternatively, second authentication data, such as a one-time PIN which may be sent to user device 110, may be entered using FSP device 120 or local FSP device 130, by keyboard, touchpad, scanner, or biometric sensor. In some embodiments, second authentication data can be sent to local FSP device 130 from a third party. In some embodiments, authentication data such may be received from the user via user device 110.

At step 460, FSP device 120 may determine whether the received second authentication data matches backend authentication data on record for the customer. In some embodiments, the determination of whether the received second authentication data matches backed authentication data on record for the customer may be a "yes" or "no" indication.

In some embodiments, the received second authentication data for the determination whether the received authentication data matches the backend authentication data on record for the customer is a hashed version of the received second authentication data. In other embodiments, the received second authentication data for the determination whether the received second authentication data matches the backend authentication data on record for the customer is an encrypted or other version of the received second authentication data. If the received second authentication data matches the backed authentication data on record for the customer, then the process continues to step 470. Otherwise, the user may not be able to make a transaction by using online credentials for authentication.

At step 470, local FSP device 130 may in response to the determination whether the received second authentication data matches backend authentication data on record for the customer, authenticate the user. In some embodiments, the user may be authenticated by online credentials and a second form of authentication for making limited transactions at the ATM. For example, a user may make up to a $50 withdrawal using online credentials and a second form of authentication. In order to make transactions higher than that limit, the user must provide a more secure type of second form of authentication data or even a third form of authentication data.

At step 480, local FSP device 130 may provide a second prompt to the user to select an interaction at the local financial service provider device.

In some embodiments, the interaction may include a withdrawal transaction, a deposit transaction, cash a check transaction, make change transaction, check balance transaction, or currency exchange transaction, etc.

At step 490, local FSP device 130 may provide an indication to the local financial service provider device to perform a transaction related to the selected interaction. In some embodiments, local FSP device 130 may print a receipt listing the performed transaction. In yet other embodiments, local FSP device 130 may send an electronic receipt to user device 110.

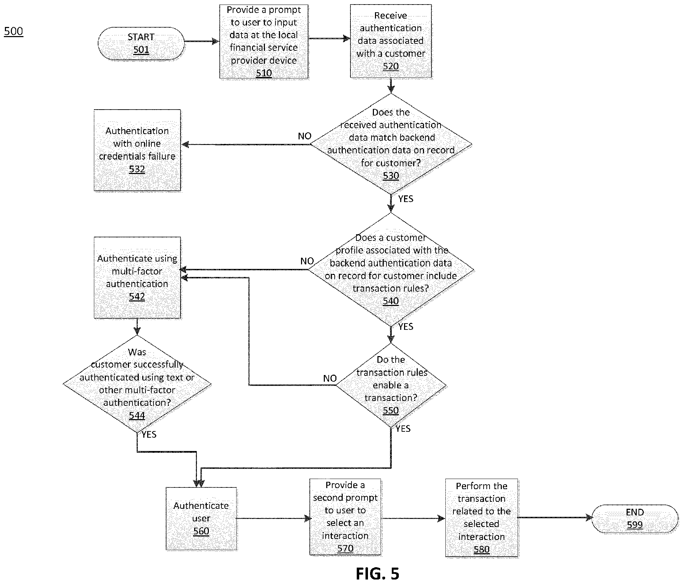

Figure 5 is a block diagram of an exemplary process for transacting at a local financial service provider device by online credentials and either transaction rules or a second form of authentication data, consistent with disclosed embodiments. Process 500 may be performed by processor 210 of, for example, FSP device 120 or local FSP device 130 executing instructions encoded on a computer-readable medium storage device. It is to be understood, however, that one or more steps of process 500 may be implemented by other components of system 100 (shown or not shown), including biometric database 150 and/or user device 110.

Process 500 begins at 501. At step 510, as also discussed with reference to Figures 3 and 4, local FSP device 130 provides a prompt to a user to input data at the local financial service provider device. An ATM may, for example, initially display an option to transact by using card and PIN or transact using username and password. If the user chooses the option to transact using username and password, the ATM may provide a prompt for the user to input the information. At step 520, local FSP device 130 receives authentication data associated with a customer. At step 530, local FSP device 130 may determine whether the received authentication data matches backend authentication data on record for the customer. Local FSP device 130 may check whether a hashed version of the provided username and password match backend authentication data on record. If not, at step 532, authentication with online credentials fails. In such an embodiment, the user may transact at the ATM via card and PIN. If yes, at step 540, local FSP device 130 determines whether a customer profile associated with the backend authentication data on the record for the customer includes transaction rules. In some embodiments, the transaction rules may include locations or times to allow transactions by online credentials. If yes, at step 550, local FSP device 130 determines whether the transaction rules enable a transaction. For example, the ATM may check if the current location or time is one that the user indicated in the transaction rules to allow a transaction to take place.

If it is determined at step 540 that a customer profile associated with the backend authentication data on record for the customer does not include transaction rules or determined at step 550 that the transaction rules do not enable a transaction, local FSP device 130 authenticates using multi-factor authentication at step 542. In such an embodiment, the user may provide a second from of authentication data such as text, email, answer a question, or biometric data in order to transact by online credentials at the ATM. Then, at step 544, local FSP device 130 determines whether the customer was successfully authenticated using text, email, or another multi-factor authentication. If yes, at step 560, authenticate the user, at step 570, provide a second prompt to the user to select and interaction, at step 580, perform the transaction related to the selected interaction, and end at step 599. If yes to step 550, then, at step 560, authenticate the user, at step 570, provide a second prompt to the user to select and interaction, at step 580, perform the transaction related to the selected interaction, and end at step 599.

The foregoing description has been presented for purposes of illustration. It is not exhaustive and is not limited to the precise forms or embodiments disclosed. Modifications and adaptations of the embodiments will be apparent from consideration of the specification and practice of the disclosed embodiments. For example, the described implementations include hardware and software, but systems and methods consistent with the present disclosure can be implemented as hardware alone.

Computer programs based on the written description and methods of this specification are within the skill of a software developer. The various programs or program modules can be created using a variety of programming techniques. For example, program sections or program modules can be designed in or by means of Java™, C, C++, assembly language, or any such programming languages. One or more of such software sections or modules can be integrated into a computer system, non-transitory computer-readable media, or existing communications software.

Moreover, while illustrative embodiments have been described herein, the scope includes any and all embodiments having equivalent elements, modifications, omissions, combinations (e.g., of aspects across various embodiments), adaptations or alterations based on the present disclosure. The elements in the claims are to be interpreted broadly based on the language employed in the claims and not limited to examples described in the present specification or during the prosecution of the application, which examples are to be construed as non-exclusive. Further, the steps of the disclosed methods can be modified in any manner, including by reordering steps or inserting or deleting steps. It is intended, therefore, that the specification and examples be considered as exemplary only, with a true scope being indicated by the following claims and their full scope of equivalents.

Further features of embodiments are set out in the below clauses
1. A system for transacting at a local financial service provider device, comprising:
   one or more memory devices storing instructions; and
   one or more processors configured to execute the instructions to:
      receive an input for defining one or more customer-defined transaction rules and providing biometric data from an interactive display, wherein the interactive display provides controls for defining temporal, geographic, or multi-factor authentication constraints for the one or more customer-defined transaction rules;
      associate the one or more customer-defined transaction rules and the biometric data with a customer profile associated with backend authentication data on record for a customer;
      provide a prompt to a user to input data at the local financial service provider device;
      receive, via the prompt, authentication data associated with the customer, wherein the authentication data includes a username and password;
      determine whether the received authentication data matches the backend authentication data on record for the customer;
      in response to the determination whether the received authentication data matches the backend authentication data on record for the customer, determine whether the customer profile associated with the backend authentication data includes the one or more customer-defined transaction rules;
      in response to the determination whether the customer profile associated with the backend authentication data includes the one or more customer-defined transaction rules, determine whether the one or more customer-defined transaction rules enable a transaction to take place;
      provide a biometric check at the local financial service device;
      receive biometric data of the user;
      determine whether the received biometric data matches the backend authentication data on record for the customer;
      in response to the determination whether the one or more customer-defined transaction rules enable the transaction to take place and the determination whether the received biometric data matches the backend authentication data on record for the customer, authenticate the user;
      provide a second prompt to the user to select an interaction at the local financial service provider device; and
      provide an indication to the local financial service provider device to perform the transaction related to the selected interaction.
2. The system of clause 1, wherein the local financial service provider device is an ATM.
3. The system of clause 1, wherein the received authentication data for the determination whether the received authentication data matches the backend authentication data on record for the customer is a hashed version of the received authentication data.
4. The system of clause 1, wherein the one or more customer-defined transaction rules include rules set up by the customer in the customer profile for transacting with the local financial service provider device by username and password.
5. The system of clause 1, wherein determining whether the one or more customer-defined transaction rules enable the transaction to take place includes at least one of:
   determining, by checking the customer profile, if the user is allowed to do at least one of:
   authenticate against the local financial service provider device by the username and password,
   authenticate against the local financial service provider device at a certain location,
   authenticate against the local financial service provider device at a certain time,
   authenticate against the local financial service provider device on a certain date, or
   authenticate against the local financial service provider device without multi-factor authentication.
6. The system of clause 1, wherein the interaction includes at least one of a withdrawal transaction, a deposit transaction, cash a check transaction, make change transaction, check balance transaction, or currency exchange transaction.
7. The system of clause 1, further including instructions to print a receipt listing the performed transaction.
8. A computer-implemented method for transacting at a local financial service provider device, comprising:
   receiving an input for defining one or more customer-defined transaction rules and providing biometric data from an interactive display, wherein the interactive display provides controls for defining temporal, geographic, or multi-factor authentication constraints for the one or more customer-defined transaction rules;
   associating the one or more customer-defined transaction rules and the biometric data with a customer profile associated with backend authentication data on record for a customer;
   providing, by one or more processors, a prompt to a user to input data at the local financial service provider device;
   receiving via the prompt, by the one or more processors, authentication data associated with the customer, wherein the authentication data includes a username and password;
   determining, by the one or more processors, whether the received authentication data matches the backend authentication data on record for the customer;
   in response to the determination whether the received authentication data matches the backend authentication data on record for the customer, determining, by the one or more processors, whether the customer profile associated with the backend authentication data includes the one or more customer-defined transaction rules;
   in response to the determination whether the customer profile associated with the backend authentication data includes the one or more customer-defined transaction rules, determining, by the one or more processors, whether the one or more customer-defined transaction rules enable a transaction to take place;
      providing a biometric check at the local financial service device;
      receiving biometric data of the user;
      determining whether the received biometric data matches the backend authentication data on record for the customer;
   in response to the determination whether the one or more customer-defined transaction rules enable the transaction to take place and the determination whether the received biometric data matches the backend authentication data on record for the customer, authenticating the user, by the one or more processors;
   providing, by the one or more processors, a second prompt to the user to select an interaction at the local financial service provider device; and
   providing, by the one or more processors, an indication to the local financial service provider device to perform the transaction related to the selected interaction.
9. The computer-implemented method of clause 8, wherein the local financial service provider device is an ATM.
10. The computer-implemented method of clause 8, wherein the received authentication data for the determination whether the received authentication data matches the backend authentication data on record for the customer is a hashed version of the received authentication data.
11. The computer-implemented method of clause 8, wherein the one or more customer-defined transaction rules include rules set up by the customer in the customer profile for transacting with the local financial service provider device by username and password.
12. The computer-implemented method of clause 8, wherein determining whether the one or more customer-defined transaction rules enable the transaction to take place includes at least one of:
   determining, by checking the customer profile, if the user is allowed to do at least one of:
   authenticate against the local financial service provider device by the username and password,
   authenticate against the local financial service provider device at a certain location,
   authenticate against the local financial service provider device at a certain time,
   authenticate against the local financial service provider device on a certain date, or
   authenticate against the local financial service provider device without multi-factor authentication.
13. The computer-implemented method of clause 8, wherein the interaction includes at least one of a withdrawal transaction, a deposit transaction, cash a check transaction, make change transaction, check balance transaction, or currency exchange transaction.
14. The computer-implemented method of clause 8, further including instructions to print a receipt listing the performed transaction.
15. A system for transacting at a local financial service provider device, comprising:
   one or more memory devices storing instructions; and
   one or more processors configured to execute the instructions to:
      provide a prompt to a user to input data at the local financial service provider device;
      receive, via the prompt, first authentication data associated with a customer, wherein the first authentication data includes a username and password;
      determine whether the received first authentication data matches backend authentication data on record for the customer;
      in response to the determination whether the received first authentication data matches backend authentication data on record for the customer, provide a prompt via a second device separate from the local financial service provider device;
      receive second authentication data associated with the backend authentication data on record for the customer;
      determine whether the received second authentication data matches backend authentication data on record for the customer;
      provide a biometric check at the local financial service device;
      receive biometric data of the user;
      determine whether the received biometric data matches backend authentication data on record for the customer;
      in response to the determination whether the received second authentication data matches backend authentication data on record for the customer and the determination whether the received biometric data matches backend authentication data on record for the customer, authenticate the user;
      provide a second prompt to the user to select an interaction at the local financial service provider device; and
      provide an indication to the local financial service provider device to perform a transaction related to the selected interaction.
16. The system of clause 15, wherein the local financial service provider device is an ATM.
17. The system of clause 15, wherein the received first authentication data and second authentication data are hashed versions of the received authentication data.
18. The system of clause 15, wherein the interaction includes at least one of a withdrawal transaction, a deposit transaction, cash a check transaction, make change transaction, check balance transaction, or currency exchange transaction.
19. The system of clause 15, further including instructions to print a receipt listing the performed transaction.
20. The system of clause 15, further including instructions to send an electronic receipt to the second device.

## Claims

1. A system for transacting at a local financial service provider device, comprising:
one or more memory devices storing instructions; and
one or more processors configured to execute the instructions to:
receive an input for defining one or more customer-defined transaction rules from an interactive display, wherein the interactive display provides controls for defining temporal, geographic, or multi-factor authentication constraints for the one or more customer-defined transaction rules;
associate the one or more customer-defined transaction rules with a customer profile associated with backend authentication data on record for a customer;
provide a prompt to a user to input data at the local financial service provider device;
receive, via the prompt, authentication data associated with the customer, wherein the authentication data includes a username and password;
determine whether the received authentication data matches the backend authentication data on record for the customer;
in response to the determination whether the received authentication data matches the backend authentication data on record for the customer, determine whether the customer profile associated with the backend authentication data includes the one or more customer-defined transaction rules;
in response to the determination whether the customer profile associated with the backend authentication data includes the one or more customer-defined transaction rules, determine whether the one or more customer-defined transaction rules enable a transaction to take place;
in response to the determination whether the one or more customer-defined transaction rules enable the transaction to take place, authenticate the user;
provide a second prompt to the user to select an interaction at the local financial service provider device; and
provide an indication to the local financial service provider device to perform the transaction related to the selected interaction.

2. A system for transacting at a local financial service provider device, comprising:
one or more memory devices storing instructions; and
one or more processors configured to execute the instructions to:
provide a prompt to a user to input data at the local financial service provider device;
receive, via the prompt, first authentication data associated with a customer, wherein the first authentication data includes a username and password;
determine whether the received first authentication data matches backend authentication data on record for the customer;
in response to the determination whether the received first authentication data matches backend authentication data on record for the customer, provide a prompt via a second device separate from the local financial service provider device;
receive second authentication data associated with the backend authentication data on record for the customer;
determine whether the received second authentication data matches backend authentication data on record for the customer;
in response to the determination whether the received second authentication data matches backend authentication data on record for the customer, authenticate the user;
provide a second prompt to the user to select an interaction at the local financial service provider device; and
provide an indication to the local financial service provider device to perform a transaction related to the selected interaction.

3. The system of claim 1 or 2, wherein the local financial service provider device is an ATM.

4. The system of any preceding claim, wherein the interaction includes at least one of a withdrawal transaction, a deposit transaction, cash a check transaction, make change transaction, check balance transaction, or currency exchange transaction.

5. The system of any preceding claim, wherein the received authentication data for the determination whether the received authentication data matches the backend authentication data on record for the customer is a hashed version of the received authentication data.

6. The system of claim 1, wherein the one or more customer-defined transaction rules include rules set up by the customer for transacting with the local financial service provider device by username and password.

7. The system of claim 1, wherein determining whether the one or more customer-defined transaction rules enable the transaction to take place includes at least one of:
determining, by checking the customer profile, if the user is allowed to do at least one of:
authenticate against the local financial service provider device by the username and password,
authenticate against the local financial service provider device at a certain location,
authenticate against the local financial service provider device at a certain time,
authenticate against the local financial service provider device on a certain date, or
authenticate against the local financial service provider device without multi-factor authentication.

8. The system of claim 1 or 2, further including instructions to print a receipt listing the performed transaction.

9. The system of claim 2, wherein the received first authentication data and second authentication data are hashed versions of the received authentication data.

10. The system of claim 2, further including instructions to send an electronic receipt to the second device.

11. A computer-implemented method for transacting at a local financial service provider device, comprising:
receiving an input for defining one or more customer-defined transaction rules from an interactive display, wherein the interactive display provides controls for defining temporal, geographic, or multi-factor authentication constraints for the one or more customer-defined transaction rules;
associating the one or more customer-defined transaction rules with a customer profile associated with backend authentication data on record for a customer;
providing, by one or more processors, a prompt to a user to input data at the local financial service provider device;
receiving via the prompt, by the one or more processors, authentication data associated with the customer, wherein the authentication data includes a username and password;
determining, by the one or more processors, whether the received authentication data matches the backend authentication data on record for the customer;
in response to the determination whether the received authentication data matches the backend authentication data on record for the customer, determining, by the one or more processors, whether the customer profile associated with the backend authentication data includes the one or more customer-defined transaction rules;
in response to the determination whether the customer profile associated with the backend authentication data includes the one or more customer-defined transaction rules, determining, by the one or more processors, whether the one or more customer-defined transaction rules enable a transaction to take place;
in response to the determination whether the one or more customer-defined transaction rules enable the transaction to take place, authenticating the user, by the one or more processors;
providing, by the one or more processors, a second prompt to the user to select an interaction at the local financial service provider device; and
providing, by the one or more processors, an indication to the local financial service provider device to perform the transaction related to the selected interaction.

12. The computer-implemented method of claim 11, wherein the local financial service provider device is an ATM.

13. The computer-implemented method of claim 11, wherein the received authentication data for the determination whether the received authentication data matches the backend authentication data on record for the customer is a hashed version of the received authentication data.

14. The computer-implemented method of claim 11, wherein the one or more customer-defined transaction rules include rules set up by the customer for transacting with the local financial service provider device by username and password.

15. The computer-implemented method of claim 11, wherein determining whether the one or more customer-defined transaction rules enable the transaction to take place includes at least one of:
determining, by checking the customer profile, if the user is allowed to do at least one of:
authenticate against the local financial service provider device by the username and password,
authenticate against the local financial service provider device at a certain location,
authenticate against the local financial service provider device at a certain time,
authenticate against the local financial service provider device on a certain date, or
authenticate against the local financial service provider device without multi-factor authentication.

16. The computer-implemented method of claim 11, wherein the interaction includes at least one of a withdrawal transaction, a deposit transaction, cash a check transaction, make change transaction, check balance transaction, or currency exchange transaction.

17. The computer-implemented method of claim 11, further including instructions to print a receipt listing the performed transaction.
